# EUROPEAN PATENT APPLICATION

(11) **EP 2 826 805 A1**
(43) Date of publication of application: **21.01.2015**
(21) Application number: 13761955.7
(22) Date of filing: 13.03.2013
(51) Int. Cl.: C08G 64/24

(54) **METHOD FOR CONTINUOUS PRODUCTION OF POLYCARBONATE**

(30) Priority: 13.03.2012 JP 2012055442
(71) Applicant: Idemitsu Kosan Co., Ltd, Tokyo 100-8321 (JP)
(72) Inventor: SEKIGUCHI, Kazuhiro, Chiba 299-0193 (JP); YASUDA, Toshiyuki, Chiba 299-0193 (JP)
(74) Representative: Hoffmann Eitle
(86) International application number: PCT/JP2013/056949
(87) International publication number: WO 2013/137297

(57) **Abstract**

To provide a method for continuous production of a polycarbonate with safety, wherein (1) the contents of impurities in phosgene, which adversely affect a product, such as carbon tetrachloride, chloroform, etc., are decreased, and in its turn, the contents of the impurities in a polycarbonate are decreased; (2) by using a formed phosgene gas directly for an oligomer reaction step without going through a purification step, noxious phosgene is not substantially held; and preferably, (3) an apparatus is automatically stopped even at abnormal time, and noxious phosgene is detoxicated without being leaked outside the system.
Specifically, a method for continuous production of a polycarbonate including (1) a step of allowing chlorine and carbon monoxide to react with each other to continuously produce a phosgene gas; (2) a step of continuously supplying the phosgene gas continuously produced in the above-described step (1), an alkaline aqueous solution of a dihydric phenol-based compound, and an organic solvent into an oligomer reactor, to continuously produce a polycarbonate oligomer-containing reaction mixture; and (3) a step of continuously supplying the polycarbonate oligomer-containing reaction mixture produced in the above-described step (2), an alkaline aqueous solution of a dihydric phenol-based compound, and an organic solvent into a polymer reactor, to continuously produce a polycarbonate, wherein the following requirements (i) to (iii) are satisfied, is disclosed.
(i) In the step (1), chlorine and carbon monoxide are allowed to react with each other by being passed through a catalyst layer diluted with a material which is substantially inactive against carbon monoxide and chlorine, thereby controlling all of the contents of carbon tetrachloride and chloroform in the obtained phosgene gas to not more than 200 ppm by volume.
(ii) The phosgene gas continuously produced in the step (1) is used for the step (2) as it is without being purified.
(iii) At least a part of the organic solvent used in at least one of the steps (2) and (3) is purified to obtain an organic solvent having the content of each of carbon tetrachloride and chloroform of not more than 50 ppm by mass, and the organic solvent is reused as the organic solvent of at least one of the steps (2) and (3).

## Description

### TECHNICAL FIELD

The present invention relates to a method for continuous production of a polycarbonate. In more detail, the present invention relates to a method for continuous production of a polycarbonate by an interfacial polymerization method.

### BACKGROUND ART

In general, as a method for production of a polycarbonate, although an interfacial polymerization method of allowing a dihydric phenol-based compound (a bisphenol) and phosgene to react directly with each other and an ester interchange method of allowing a bisphenol and diphenyl carbonate to react with each other under a solvent-free condition are known, the interfacial polymerization method is the mainstream from the standpoint that a polycarbonate which is not colored, for example, and good in quality (see, for example, patent document 1).

In the production of phosgene that is one of the raw materials of a polycarbonate, in the case of using, as a catalyst, a commercially available active carbon as it is, it is known that large quantities of impurities (in particular, carbon tetrachloride and chloroform) are produced as by-products due to impurities in the active carbon (see patent document 2) or an increase of reaction temperature to be caused generally due to an abrupt reaction (see patent document 3), and if phosgene containing impurities is used, heat resistance is lowered, or rust of a die of an injection molding machine is caused, resulting in a problem in the quality of the polycarbonate. Furthermore, these impurities such as carbon tetrachloride, chloroform, etc. are accumulated into the organic solvent, these more adversely affect a product.

Then, there is a method in which by liquefying phosgene and conducting distillation and purification as a treatment after the formation reaction of phosgene, the contents of carbon tetrachloride and chloroform are decreased and stored, and the resultant is used for the reaction (see patent document 4).

### CITATION LIST

### PATENT LITERATURE

Patent document 1: JP 2004-331916 A
Patent document 2: JP 6-29129 B
Patent document 3: JP 55-14044 B
Patent document 4: JP 2001-261321 A

### SUMMARY OF INVENTION

### TECHNICAL PROBLEM

The method described in patent document 4 is low in safety and not industrially preferable because, for example, the holding amount of noxious phosgene increases, and furthermore, a risk such as corrosion of an apparatus, etc. increases. In addition, there is involved such a problem that apparatus costs become high. Furthermore, according to such a method, for example, in the case where the apparatus shuts down in an emergency, there is involved such a problem that it takes time to detoxicate phosgene within a reaction system because the holding amount of phosgene is large. In addition, if it is contemplated to set up detoxification equipment capable of treating phosgene in a distillation step within a short period of time, a scale of the equipment becomes large, and therefore, there is encountered such a problem that the equipment expenses become very high.

Then, a problem of the present invention is to provide a method for continuous production of a polycarbonate with safety, wherein (1) the contents of impurities in phosgene, which adversely affect a product, such as carbon tetrachloride, chloroform, etc., are decreased, and in its turn, the contents of the above-described impurities in a polycarbonate are decreased; (2) by using a formed phosgene gas directly for an oligomer reaction step without going through a purification step, noxious phosgene is not substantially held; and preferably, (3) an apparatus is automatically stopped even at abnormal time, and noxious phosgene is detoxicated without being leaked outside the system.

### SOLUTION TO PROBLEM

The present invention relates to the following items [1] to [3].
[1] A method for continuous production of a polycarbonate comprising (1) a step of allowing chlorine and carbon monoxide to react with each other to continuously produce a phosgene gas; (2) a step of continuously supplying the phosgene gas continuously produced in the above-described step (1), an alkaline aqueous solution of a dihydric phenol-based compound, and an organic solvent into an oligomer reactor, to continuously produce a polycarbonate oligomer-containing reaction mixture; and (3) a step of continuously supplying the polycarbonate oligomer-containing reaction mixture produced in the above-described step (2), an alkaline aqueous solution of a dihydric phenol-based compound, and an organic solvent into a polymer reactor, to continuously produce a polycarbonate, wherein the following requirements (i) to (iii) are satisfied.
   (i) In the step (1), chlorine and carbon monoxide are allowed to react with each other by being passed through a catalyst layer diluted with a material which is substantially inactive against carbon monoxide and chlorine, thereby controlling all of the contents of carbon tetrachloride and chloroform in the obtained phosgene gas to not more than 200 ppm by volume.
   (ii) The phosgene gas continuously produced in the step (1) is used for the step (2) as it is without being purified.
   (iii) At least a part of the organic solvent used in at least one of the steps (2) and (3) is purified to obtain an organic solvent having the content of each of carbon tetrachloride and chloroform of not more than 50 ppm by mass, and the organic solvent is reused as the organic solvent of at least one of the steps (2) and (3).
[2] The method for continuous production of a polycarbonate as set forth above in [1], wherein not only the supply of chlorine and carbon monoxide in the step (1) is stopped, but the supply of the phosgene gas into the oligomer reactor is stopped, and a device for transferring a noxious gas containing the phosgene gas into a detoxification device, thereby achieving harmlessness is provided.
[3] The method for continuous production of a polycarbonate as set forth above in [2], wherein the detoxification device is a device for bringing the noxious gas containing the phosgene gas into contact with an alkaline aqueous solution, thereby achieving harmlessness.

### ADVANTAGEOUS EFFECTS OF INVENTION

According to the present invention, it is possible to provide a method for continuous production of a polycarbonate with safety, wherein (1) the contents of impurities in phosgene, which adversely affect a product, such as carbon tetrachloride, chloroform, etc., are decreased, and in its turn, the contents of the impurities in a polycarbonate are decreased; (2) by using a formed phosgene gas directly for an oligomer reaction step without going through a purification step, noxious phosgene is not substantially held; and preferably, (3) an apparatus is automatically stopped even at abnormal time, and noxious phosgene is detoxicated without being leaked outside the system.

### BRIEF DESCRIPTION OF DRAWING

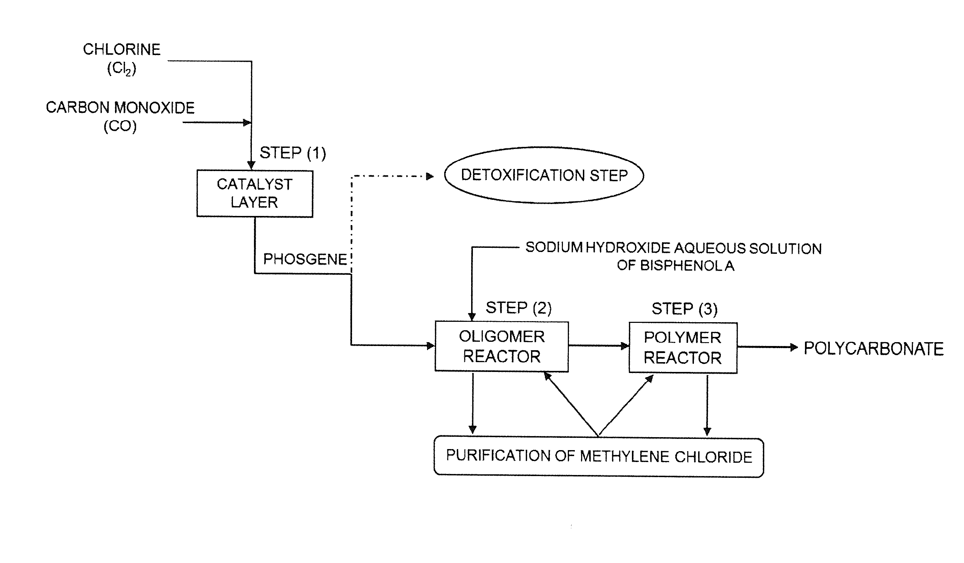

FIG. 1 is a flow chart showing an outline of a preferred embodiment of a method for continuous production of a polycarbonate of the present invention.

### DESCRIPTION OF EMBODIMENTS

### [Method for continuous production of polycarbonate]

The method for continuous production of a polycarbonate of the present invention includes the following steps (1) to (3).

Step (1) : A step of allowing chlorine and carbon monoxide to react with each other to continuously produce a phosgene gas.

Step (2) : A step of continuously supplying the phosgene gas continuously produced in the above-described step (1), an alkaline aqueous solution of a dihydric phenol-based compound, and an organic solvent into an oligomer reactor, to continuously produce a polycarbonate oligomer-containing reaction mixture.

Step (3): A step of continuously supplying the polycarbonate oligomer-containing reaction mixture produced in the above-described step (2), an alkaline aqueous solution of a dihydric phenol-based compound, and an organic solvent into a polymer reactor, to continuously produce a polycarbonate.

In addition, the method for continuous production of a polycarbonate of the present invention is satisfied with the following requirements (i) to (iii) in the above-described steps (1) to (3).

### [Requirements]

Requirement (i): In the step (1), chlorine and carbon monoxide are allowed to react with each other by being passed through a catalyst layer diluted with a material which is substantially inactive against carbon monoxide and chlorine, thereby controlling all of the contents of carbon tetrachloride and chloroform in the obtained phosgene gas to not more than 200 ppm by volume.

Requirement (ii) : The phosgene gas continuously produced in the step (1) is used for the step (2) as it is without being purified.

Requirement (iii) : At least a part of the organic solvent used in at least one of the steps (2) and (3) is purified to obtain an organic solvent having the content of each of carbon tetrachloride and chloroform of not more than 50 ppm by mass, and the organic solvent is reused as the organic solvent of at least one of the steps (2) and (3).

### <Step (1)>

The step (1) is a step of allowing chlorine and carbon monoxide to react with each other to continuously produce a phosgene gas.

From the viewpoint of quality of the polycarbonate, carbon monoxide is preferably one obtained by allowing coke, petroleum, a natural gas, an alcohol, or the like and oxygen to react with each other to produce carbon monoxide, which is then purified to an extent of a purity of 95% by volume or more. In particular, carbon monoxide having a content of a sulfur component of not more than 50 ppm by volume is preferable. In addition, a ratio (molar ratio) of chlorine to carbon monoxide is preferably from 1/1.01 to 1/1.3, and more preferably from 1/1.02 to 1/1.2.

It is to be noted that although the reaction can be carried out by reference to a known method described in, for example, JP 55-14044 B or the like, it is necessary that chlorine and carbon monoxide are allowed to react with each other by being passed through a catalyst layer diluted with a material (diluent) which is substantially inactive against carbon monoxide and chlorine, thereby controlling all of the contents of carbon tetrachloride and chloroform in the obtained phosgene gas to not more than 200 ppm by volume (requirement (i)). By controlling the content of each of carbon tetrachloride and chloroform in the phosgene gas to this range, it is possible to stably produce a high-quality polycarbonate.

Carbon monoxide and chlorine are each preferably a dry material having a high purity. In the case of carbon monoxide, there is a concern that if hydrogen is present as the impurity, it reacts with chlorine as a raw material for phosgene production, to form hydrochloric acid, or if moisture is present, it hydrolyzes formed phosgene into carbon dioxide and hydrochloric acid.

Meanwhile, in the case of chlorine, if a hydrocarbon is present as the impurity, hydrochloric acid is easily formed, or a corresponding chlorinated hydrocarbon is easily formed. Since such a formed product has high adsorption ability onto active carbon as the catalyst according to the invention of the present application, it becomes a catalyst poison, and hence, it is not preferable. In addition, if a sulfide is present in the above-described chlorine, it forms a sulfur chloride, and it is preferable to remove the sulfide in advance as far as possible. Furthermore, the presence of oxygen brings about an evil of suppressing the phosgene formation reaction, and hence, such is not preferable.

As a method for production of carbon monoxide, various methods are known, and a synthetic gas, a carbide furnace gas, a blast furnace gas, a steel-making furnace gas, and the like can be used, too. In general, in view of the above-described requirement for high purity, carbon monoxide obtained by means of purification by passing through an adsorption column, cryogenic separation, or the like is preferable. Meanwhile, as a method for production of chlorine, a method for purification of chlorine formed following electrolysis of a salt aqueous solution (for example, a diaphragm method or an ion exchange membrane method) can be preferably applied.

As the catalyst which is used for the above-described catalyst layer, in general, active carbon is used. As for the active carbon, although it is not necessary to use a special material, the following can be classified and exemplified as representative materials.
(1) From the standpoint of a form: powdered active carbon and granulated active carbon (in a form of pellet, tablet, etc.)
(2) From the standpoint of a raw material: active carbon made of, as a raw material, wood, sawdust, coconut shell, lignin, lignite, brown coal, peat, or coal
(3) From the standpoint of a treatment: active carbon pretreated by a steam activation method, a chemical activation method, etc.

In addition, a material which is substantially inactive against carbon monoxide and chlorine is used as a diluent of the catalyst layer (active carbon). The diluent of the catalyst layer dilutes a concentration of the catalyst component in the catalyst layer to prevent centralization of heat generation following the reaction. The effect of the present invention is not obtained so long as the diluent itself is reactive with carbon monoxide or chlorine. In addition, the effect of the invention is not obtained, too so long as the diluent has positively or negatively catalytic activity against the reaction with carbon monoxide and chlorine. In addition, in the diluent, it is also necessary that impurities contained therein are inactive against carbon monoxide and chlorine.

As the diluent, the following can be classified and exemplified.
(1) From the standpoint of quality: ceramics, metals, and the like which are substantially inactive against the raw material gas
(2) Ceramics: materials made of, as a raw material, alumina, zirconia, magnesium oxide, chromium oxide, silicon carbide, zinc sulfide, etc.
(3) Metals: noble metals as a single material, and besides, alloys such as stainless steel, hastelloy, inconel, etc. In general, metals are better in thermal conductivity than ceramics, and therefore, the metals are suitable for a lowering of a heat generation temperature.
(4) From the standpoint of a shape: although examples of a shape which is easily mixed with active carbon include a spherical shape, a ring shape, an annular shape, and the like, a spherical shape and a ring shape which are, in general, easily available are preferable. A hollow spherical material which is small in a difference of density from active carbon and hardly causes separation and segregation at the time of mixing and packing is more preferable. Ring-shaped or tubular materials having such a structure that separation and segregation from active carbon are hardly caused, which are used in a packed column or the like for the purpose of increasing contact properties between a fluid and a packing material, for example, a Raschig ring, a Lessing ring, Tellerette, Pall ring, etc., are preferable, with a Raschig ring being more preferable.
(5) Size: materials in which a diameter and a length are each preferably from about 0.1 to 10 mm, and more preferably from about 1 to 4 mm. Within the foregoing range, the diluent is easily dispersed stably and uniformly in the active carbon, and a hot spot or an uneven flow is hardly formed in the catalyst layer.

A dilution rate of the catalyst layer is preferably from 5 to 90% by volume, more preferably from 5 to 80% by volume, still more preferably from 15 to 80% by volume, and especially preferably from 30 to 80% by volume with respect to the diluent. So long as the dilution rate is 5% by volume or more, an effect for a lowering of the reaction temperature by means of dilution is obtained, whereas so long as it is not more than 90% by volume, uniform dilution becomes easy.

Although it is the most preferable to carry out the dilution of the catalyst layer (active carbon) all over the catalyst layer, in general, in the case of carrying out the heat generation reaction by a tubular reactor as in the case of production of phosgene by means of the above-described reaction of carbon monoxide and chlorine, since it is known that an abrupt temperature increase occurs in the first portion of the reactor (for example, Chemical Equipment Design Guide (1991), edited by The Society of Chemical Engineers, Japan), it is necessary to dilute the catalyst layer in at least this first portion or an introduction portion of the raw material gas, and it is possible to avoid an influence by the undesirable reaction temperature increase by this dilution.

The reaction of carbon monoxide and chlorine is a general reaction known by the following reaction formula:

CO + Cl₂ → COCl₂

and as for the temperature and pressure and the like, the reaction can be carried out in conformity with a known method. It is preferable that a molar ratio between the both raw materials is in general equimolar, or a slightly excessive amount of carbon monoxide is used for the purpose of allowing chlorine to not retain, and the latter is more preferable.

As for the type of the reactor, a tubular reactor of a multi-tube type is preferable. In addition, in order to quickly remove a large quantity of heat generated in the reactor, the reactor is preferably a reactor equipped with a jacket through which cooling water is passed. It is preferable to keep a temperature within the reactor to not higher than 350°C.

Although an inner diameter of the reaction tube is not particularly limited, in order to uniformly pack the catalyst and the diluent, the inner diameter is preferably from about 3 to 200 mm. In addition, a length of the reaction tube is influenced by the inner diameter of the reaction tube, the flow rate of the raw material gas, the cooling efficiency, and the like and cannot be specified.

The number of reaction tubes is variable according to the amount of phosgene to be produced and is not particularly limited. From the standpoint of operations of packing the catalyst and the like in the inside of the reaction tube, a vertical-type reaction tube is more preferably used than a horizontal-type reaction tube. As for the quality of the phosgene reactor, in particular, an inner wall of the reaction tube is required to have resistance to carbon monoxide (CO) and resistance to chlorine (Cl₂), and a glass-made material or a stainless steel-made material is especially preferably used.

By allowing carbon monoxide and chlorine to react with each other in the foregoing way, it is possible to produce a phosgene gas having all of the contents of carbon tetrachloride and chloroform of not more than 200 ppm by volume. From the viewpoint of stably producing a high-quality polycarbonate, all of the contents of carbon tetrachloride and chloroform in the phosgene gas are preferably not more than 150 ppm by volume, and in particular, the content of carbon tetrachloride is more preferably not more than 100 ppm by volume.

It is to be noted that the phosgene gas obtained in the step (1) generally contains unreacted carbon monoxide. From the viewpoints of costs and quality of the polycarbonate oligomer, the content of carbon monoxide in the phosgene gas is preferably from 1 to 30% by volume, and more preferably from 2 to 20% by volume. That is, a phosgene gas having a purity of from 99 to 70% by volume is preferable.

### <Step (2)>

The step (2) is a step of continuously supplying the phosgene gas continuously produced in the above-described step (1), an alkaline aqueous solution of a dihydric phenol-based compound, and an organic solvent into an oligomer reactor, to continuously produce a polycarbonate oligomer-containing reaction mixture.

Examples of the raw materials in the production of a polycarbonate include a phosgene gas, a dihydric phenol-based compound (a bisphenol), an alkaline compound which is used for dissolving the dihydric phenol-based compound therein, and an organic solvent, and if desired, a monohydric phenol-based compound as a molecular weight modifier and other additives may also be used.

In particular, in the present step (2), the phosgene gas continuously produced in the above-described step (1) is used as the phosgene gas as it is "without being purified" (requirement (ii)). According to this, since the reaction can be carried out without substantially holding noxious phosgene, the step is high in safety and industrially preferable.

Examples of the dihydric phenol-based compound include bis(4-hydroxyphenyl)alkanes such as 2,2-bis(4-hydroxyphenyl)propane (trivial name: bisphenol A; BPA), bis(4-hydroxyphenyl)methane, 1,1-bis(4-hydroxyphenyl)ethane, 1,2-bis(4-hydroxyphenyl)ethane, etc.; bis(4-hydroxyphenyl)cycloalkanes such as 1,1-bis(4-hydroxyphenyl)cyclohexane, 1,1-bis(4-hydroxyphenyl)cyclodecane, etc.; 4,4'-dihydroxydiphenyl, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl) ether, bis(4-hydroxyphenyl) ketone, hydroquinone, and the like. Of these, 2,2-bis(4-hydroxyphenyl)propane (trivial name: bisphenol A; BPA) is preferable from the standpoint of physical properties of the polycarbonate. These dihydric phenol-based compounds may be used solely, or two or more kinds thereof may be used in combination.

Examples of the alkaline compound which is used for dissolving the dihydric phenol-based compound therein include alkali metal hydroxides such as sodium hydroxide, potassium hydroxide, etc.; alkaline earth metal hydroxides such as magnesium hydroxide, calcium hydroxide, etc.; and the like. Of these, sodium hydroxide is suitable. It is to be noted that it is preferable to use the alkaline compound as an aqueous solution thereof.

The organic solvent may be a water-insoluble organic solvent capable of dissolving the polycarbonate oligomer therein. Examples of such an organic solvent include halogen-based (particularly chlorine-based) solvents such as methylene chloride, dichloroethane, chloroform, chlorobenzene, carbon tetrachloride, etc.; cyclic oxy compounds such as dioxane, etc.; and the like. Of these, chlorine-based solvents are preferable, and from the viewpoints of solubility of the polycarbonate oligomer, and the like, methylene chloride is more preferable.

Besides the above-exemplified organic solvents, so long as the solubility of the polycarbonate oligomer is not lowered, a solvent which is called a poor solvent, such as alkanes, etc. , may be used, too.

The organic solvent may be used solely, or two or more kinds thereof may be used in combination.

Examples of the monohydric phenol-based compound which is used as the molecular weight modifier include phenol, p-cresol, p-tert-butylphenol, p-tert-octylphenol, p-cumylphenol, nonylphenol, and the like. Of these, from the viewpoints of production costs, easy availability, and the like, phenol and p-tert-butylphenol are preferable, and p-tert-butylphenol is more preferable.

In the production of a polycarbonate oligomer, if desired, a polymerization catalyst such as a tertiary amine, a quaternary amine, etc. can also be used. Examples of the tertiary amine include trimethylamine, triethylamine, tripropylamine, and the like. Examples of the quaternary ammonium salt include trimethylbenzylammonium chloride, triethylammonium chloride, and the like. As the polymerization catalyst, a tertiary amine is preferable, and triethylamine (TEA) is more preferable.

As the oligomer reactor, a reactor of a continuous reaction system is used, and a tubular reactor of a tubular structure having a mixing section for mixing the reaction raw materials is preferably used.

It is to be noted that the oligomer reactor is preferably set up within a building and isolated from the outside. It is important from the standpoint of safety that air within the building is always exchanged, and the ventilated air in the inside is sent to a detoxification device of the phosgene gas by a blower or the like.

The supply amounts of the raw materials into the oligomer reactor and the reaction condition in the step (2) are properly determined depending upon the scale of the apparatus, the production amount, and the like.

As an example, a preferred condition in the case of producing a polycarbonate oligomer in an amount of about 200 kg per hour is hereunder described, but it should not be construed that the present invention is limited thereto. A preferred flow rate of the phosgene gas obtained by the step (1) is from 3.7 to 4.1 kg/h. A temperature of the phosgene gas is preferably in the range of from a boiling point (7.8°C) of phosgene to 90°C. As the alkaline aqueous solution of a dihydric phenol-based compound, a sodium hydroxide aqueous solution of bisphenol A is preferable, and it is adjusted in advance so as to have a prescribed concentration and then supplied. In the alkaline aqueous solution of a dihydric phenol-based compound, particularly the sodium hydroxide aqueous solution of bisphenol A, a preferred concentration of the dihydric phenol-based compound (concentration of bisphenol A) is from 12.5 to 14.5% by mass, and a preferred concentration of the alkali (concentration of sodium hydroxide) is from 5.1 to 6.1% by mass. A preferred flow rate of the alkaline aqueous solution of a dihydric phenol-based compound, particularly the sodium hydroxide aqueous solution of bisphenol A is from 42 to 46 kg/h. A flow rate of the organic solvent such as methylene chloride, etc. is preferably from 20 to 24 kg/h.

In the step (2), a reaction mixture containing a polycarbonate oligomer having a chloroformate group is obtained. Properties of the above-described polycarbonate oligomer are not particularly limited, and a reaction condition may be set so as to properly obtain optimum properties; however, a molecular weight measured by VPO (vapor pressure osmometer) is preferably from about 600 to 5,000.

The organic solvent can be recovered by properly concentrating an emulsion solution of the polycarbonate oligomer obtained in the step (2). By carrying out concentration, it is possible to recover the methylene chloride having carbon tetrachloride and chloroform taken thereinto. The recovered organic solvent is purified by a purification measure as described later and reused as the organic solvent in the step (2) or the step (3) as described later.

### <Step (3)>

The polycarbonate oligomer-containing reaction mixture obtained in the above-described step (2) is a mixture of an organic phase having the polycarbonate oligomer dissolved in the above-described organic solvent and an aqueous phase containing the alkaline aqueous solution and is formed in an emulsion state. In the step (3), by introducing this reaction mixture or the separated organic layer into a polymer reactor and further subjecting to a condensation reaction with a dihydric phenol-based compound, it is possible to produce a polycarbonate. If desired, the reaction may also be carried out in the presence of the above-described polymerization catalyst. On that occasion, by adding a polyorganosiloxane in the polymer reactor, the polycarbonate can also be converted into a polycarbonate-polyorganosiloxane copolymer (PC-POS).

In addition, after completion of the condensation reaction, by separating and washing the reaction solution by a known method and then concentrating the resultant, followed by powdering or the like, a powdered polycarbonate can be obtained, and by further treating with an extruder or the like, the powdered polycarbonate can be pelletized. The organic solvent is recovered together with impurities from the organic phase obtained in these steps and subjected to a purification measure as described later, and the recovered organic solvent is reused as the organic solvent which is used in the step (2) or (3).

In the present invention, at least a part of the organic solvent used in at least one of the steps (2) and (3) is purified to obtain an organic solvent having the content of each of carbon tetrachloride and chloroform of not more than 50 ppm by mass, and the organic solvent is reused as the organic solvent of the step (2) or the step (3) (requirement (iii)). Preferably, at least a part of the organic solvent which is used in the step (3) is purified to form an organic solvent having the content of each of carbon tetrachloride and chloroform of not more than 50 ppm by mass, which is then reused as the organic solvent of the step (2) or the step (3).

The content of each of carbon tetrachloride and chloroform in the organic solvent for the purpose of being reused is preferably not more than 20 ppm by mass, more preferably not more than 10 ppm by mass, and still more than 5 ppm by mass. By controlling the content of each of carbon tetrachloride and chloroform in the organic solvent to this range, it is possible to stably produce a high-quality polycarbonate.

The purification measure is not particularly limited, and a known purification measure may be adopted such that the content of each of carbon tetrachloride and chloroform in the organic solvent is not more than 50 ppm by mass. Examples thereof include a distillation method, an adsorption method, a membrane separation method, and the like, but it should not be construed that the present invention is limited thereto. The purification measure is preferably a distillation method. From the viewpoint of controlling the content of each of carbon tetrachloride and chloroform in the organic solvent to not more than 50 ppm by mass, it is preferable to carry out distillation with a multi-stage distillation column having from 30 to 60 stages under conditions in a reflux ratio of from 0.3 to 5 under a pressure of from atmospheric pressure to 0.2 MPa (gauge pressure) at a column top temperature of from 40 to 70°C and a column bottom temperature of from 45 to 80°C.

Now, impurities other than carbon tetrachloride and chloroform, for example, trace amounts of chlorinated hydrocarbons or the like, may be contained in the organic solvent recovered from the step (2); however, it may be enough to decrease the content of each of carbon tetrachloride and chloroform to the above-described amount, and the majority thereof is removed together with carbon tetrachloride and chloroform by the above-described purification operation.

It is to be noted that on the occasion of reusing the recovered organic solvent as the organic solvent in the step (2) or the step (3), it may be enough that all of the contents of carbon tetrachloride and chloroform are not more than 50 ppm by mass, and for example, a measure for mixing an organic solvent obtained by carrying out a purification operation and an organic solvent which has not been subjected to a purification operation to control the content of each of carbon tetrachloride and chloroform to not more than 50 ppm may be adopted.

In the method for continuous production of a polycarbonate of the present invention, it is preferable from the standpoint of safety that the following operations (a), (b) and (c) are automatically carried out, and a device for not only preventing leakage of noxious phosgene but achieving harmlessness (detoxification device) is provided.
(a) Supply of chlorine and carbon monoxide in the step (1) of continuously producing a phosgene gas is stopped. This is an operation of discontinuing the production of a phosgene gas for the purpose of not increasing the amount of the phosgene gas in the system.
(b) Supply of the phosgene gas into the oligomer reactor is stopped. This is an operation of preventing leakage of phosgene because there is a concern that a part of phosgene flows into a downstream step in an unreacted state without being consumed within the oligomer reactor.
(c) A noxious gas containing a phosgene gas in the system is transferred into a detoxification device, thereby achieving harmlessness. This is an operation in which the increase and leakage of phosgene by the above-described operations (a) and (b) are prevented to confine the noxious gas containing a phosgene gas in the system, and in addition thereto, the phosgene gas in the system is made harmless from the viewpoint of higher safety.

### (Detoxification device)

The detoxification device is equipment for making the noxious gas containing a phosgene gas harmless with a detoxifying agent, and a know device can be used. Specific examples thereof include spraying equipment of a detoxifying agent, an absorption column for bringing the noxious gas into contact with a detoxifying agent, and the like. In addition, detoxification equipment of a column type described in JP 6-319946 A, JP 2005-305414 A, and the like can also be used.

For acidic gases such as phosgene, chlorine, etc., an alkaline substance is used as the detoxifying agent. Although the alkaline substance which is used as the detoxifying agent is not particularly limited, sodium hydroxide or potassium hydroxide is generally used, and an alkaline aqueous solution is usually used. Namely, the noxious gas containing a phosgene gas is brought into contact with an alkaline aqueous solution, thereby achieving harmlessness.

In the case where the detoxification device is a detoxification column, although the structure of the detoxification column is not particularly limited, representative examples thereof include a column in which the detoxifying agent is injected in a shower form from the top of the column by a spray or the like and brought into contact with the noxious gas supplied from the bottom, thereby achieving harmlessness. In order to increase contact efficiency between the detoxifying agent and the gas, a packing material such as a Raschig ring, etc. may be packed between an injection port of the detoxifying agent and a flow-in port of the gas. In addition, the number of detoxification columns is not particularly limited, and the design is made in such a manner that a concentration of the noxious gas in the detoxification-treated gas is not more than a prescribed concentration stipulated according to the environmental standards or the like, and preferably, it is decreased to a level at which the noxious gas is not detected.

Even if the noxious gas is not leaked, in order to make preparations for contingency, it is preferable that the detoxification device is always operated. It is to be noted that the ventilation air within the building where the oligomer reactor is set up is sent to the detoxification device by a blower or the like and made harmless, and then released outside.

A preferred embodiment of the present invention is explained by reference to the accompanying drawing, but it should not be construed that the present invention is limited by this explanation. FIG. 1 is a flow chart showing an outline of a preferred embodiment of the method for continuous production of a polycarbonate of the present invention. Chlorine and carbon monoxide are supplied into a water-cooled prescribed catalyst layer and allowed to react with each other, thereby producing a phosgene gas having the content of each of carbon tetrachloride and chloroform of not more than 200 ppm by volume. The produced phosgene gas (reaction product) is introduced directly into the oligomer reactor without being purified, and the reaction is carried out under a safe condition. In addition to the phosgene gas, a sodium hydroxide aqueous solution of bisphenol A and prescribed methylene chloride are also introduced into the oligomer reactor, and according to these reactions, an emulsion solution containing a polycarbonate oligomer is produced. The emulsion solution is introduced into the polymer reactor, and a high-quality polycarbonate is produced by a condensation reaction. A part or the whole of the methylene chloride used for the production of a polycarbonate oligomer and the production of a polycarbonate is purified to form methylene chloride having the content of each of carbon tetrachloride and chloroform of not more than 50 ppm by mass, which is then again reused as the organic solvent in the production of a polycarbonate oligomer and the production of a polycarbonate. In addition, in order to make preparations for abnormal time, equipment for detoxifying noxious phosgene is provided.

It is to be noted that detailed conditions and the like are the same as those described previously.

The content of carbon tetrachloride in the thus obtained polycarbonate is not more than 5 ppm by mass, and moreover not more than 1 ppm by mass; the content of chloroform is not more than 10 ppm by mass, and moreover not more than 5 ppm by mass; and a high-quality polycarbonate which is also excellent in heat resistance is obtained by the present invention.

### EXAMPLES

The present invention is hereunder described more specifically on the basis of the following Examples, but it should be construed that the present invention is by no means limited to these Examples.

### <Example 1>

### (Production of phosgene: Step (1))

A shell and tube type reactor in which commercially available granular active carbon (pulverized coconut shell active carbon having a diameter of from 1.2 to 1.4 mm) was packed in a stainless steel-made reaction tube having a length of 60 cm and an inner diameter of 16 mm was used as a phosgene reactor.

As for a packing mode, the above-described active carbon was packed over a length of 30 cm while leaving a portion of 30 cm on the raw material gas introduction side, and subsequently, a packing material obtained by mixing a zirconia-made ceramic ball (diameter: 2 mm) and the above-described active carbon in a mixing ratio (volume ratio) of 1 was packed in the remaining portion of 30 cm. 1.2 kg/h of carbon monoxide and 2.8 kg/h of chlorine were supplied into the reaction tube from the side packed with the diluted catalyst, thereby producing 3.9 kg/h of phosgene. Water of 90°C was passed through the shell side, thereby removing the reaction heat.

### (Production of polycarbonate oligomer: Step (2))

A tubular reactor having an inner diameter of 6 mm and a length of 30 m was used as an oligomer reactor, and the oligomer reactor was immersed in a cooling tank at 20°C. The phosgene gas obtained by the above-described method was continuously supplied into the oligomer reactor as it was. Here, a supply pressure of the phosgene gas to be supplied into the oligomer reactor was set to 0.45 MPa (gauge pressure).

3.9 kg/h of a phosgene gas, 44 kg/h of a sodium hydroxide aqueous solution of bisphenol A (BPA) having a concentration of 13.5% by mass, which was obtained by dissolving BPA in a sodium hydroxide aqueous solution having a concentration of 6% by mass, 22 kg/h of methylene chloride, and 0.46 kg/h of a methylene chloride solution of p-tert-butylphenol having a concentration of 25% by mass, to be used for molecular weight modification, were supplied into the oligomer reactor, thereby obtaining a polycarbonate oligomer solution. At that time, an inlet pressure within the oligomer reactor was 0.2 MPa (gauge pressure).

It is to be noted that the equipment for each of the phosgene production step and the polycarbonate oligomer production step is set up within a building and isolated from the outside. Furthermore, air within the building is always exchanged, and the ventilated air in the inside is sent to a detoxification equipment by a blower or the like.

### (Production of polycarbonate: Step (3))

36 kg/h of the polycarbonate oligomer solution obtained by the above-described method, 11. 8 kg/h of a sodium hydroxide solution of bisphenol A having the same concentration as that described above, 0.9 kg/h of a sodium hydroxide aqueous solution having a concentration of 25% by mass, 0.2 kg/h of a triethylamine aqueous solution having a concentration of 1% by mass, 18.2 kg/h of methylene chloride, and 0.55 kg/h of a methylene chloride solution of p-tert-butylphenol having a concentration of 25% by mass were continuously supplied into two 80-liter tank type reactors connected to each other in series, thereby advancing a polymerization reaction. The obtained polymerization liquid was diluted with methylene chloride and then allowed to go through respective washing steps of alkali washing, acid washing, and water washing, whereby it was separated into an organic phase containing a polycarbonate and an aqueous phase.

Furthermore, the organic phase containing a polycarbonate was passed through a thin film evaporation machine and a kneader to separate methylene chloride and also powder the polycarbonate, and thereafter, the powdered polycarbonate was granulated to form a polycarbonate pellet. A number average molecular weight (Mn) of the obtained polycarbonate was 23,500.

### (Distillation step of methylene chloride)

At the time of the above-described polycarbonate production, methylene chloride was recovered as a vapor chiefly from the thin film evaporation machine and the kneader and cooled, and the recovered methylene chloride was then stored in a storage tank of 1 m³. Subsequently, this recovered methylene chloride was supplied in an amount of 68 kg/h into a 20th-stage of a distillation column having the number of stages of 40 and subjected to a distillation operation at a column top temperature of 40°C and a column bottom temperature of 50°C in a column top reflux ratio of 2.0, thereby distilling and recovering methylene chloride in a recovery rate of 99.5% from the column top. The distilled and recovered methylene chloride was supplied into the above-described tubular reactor (oligomer reactor) and tank type reactor (polymer reactor) and reused.

### (Detoxification device)

A detoxification column having a column diameter of 600 mm and a packed layer height of 10 m, which was packed with CASCADE MINI RING (a registered trademark), was set up as the detoxification device of phosgene. Then, 2 m³/h of a sodium hydroxide aqueous solution having a concentration of 10% by mass was circulated as a detoxifying agent within the detoxification column. The sodium hydroxide aqueous solution was supplied from an upper portion of the column, and the air within the building where the phosgene production step and the oligomer production step were set up was supplied from a lower portion of the column.

The production of a polycarbonate was carried out under the foregoing conditions, and a concentration of carbon tetrachloride (CCl₄) and a concentration of chloroform (CHCl₃) in phosgene, a concentration of carbon tetrachloride (CCl₄) and a concentration of chloroform (CHCl₃) in methylene chloride obtained by distillation and purification after recovery, and a concentration of carbon tetrachloride (CCl₄) and a concentration of chloroform (CHCl₃) in the obtained polycarbonate pellet were measured by means of gas chromatography.

Furthermore, a metal rust test and a heat resistance test were carried out by using the obtained polycarbonate pellet. Results are shown in Table 1.

### (Metal rust test)

By using an injection molding machine, molding was carried out 100 shots at 320°C while defining 10 g of a sample of the polycarbonate pellet as one shot, and thereafter, the state of rust generation of a die (material: S-55C) was observed through visual inspection and evaluated according to the following evaluation criteria.
A: The generation of rust is not perceived.
B: Fine rust is seen in the front.

### (Heat resistance test)

By using an injection molding machine, the polycarbonate pellet was retained within a screw at 350°C for 30 minutes and then injection molded, and a YI value of a molded article at the second shot was measured in conformity with JIS K7105 and defined as an index for the heat resistance. It is meant that the smaller the value is, the more excellent the heat resistance is.

### <Examples 2 to 8>

Polycarbonates were produced under the same conditions as those in Example 1, except for changing the diluent of the catalyst layer, the length of the diluted layer, and the dilution rate as described in Table 1, and subjected to the respective evaluation tests. Results are shown in Table 1.

### <Comparative Example 1>

A polycarbonate was produced in the same manner as that in Example 1, except that in the production of phosgene (step (1)), the active carbon as a catalyst was packed in the inside of the reaction tube as it was without being diluted, and subjected to the respective evaluation tests. Results are shown in Table 1.

### <Comparative Example 2>

A polycarbonate was produced in the same manner as that in Example 1, except that in the distillation step of methylene chloride, the methylene chloride recovered from the step (3) was reused as the organic solvent in each of the step (2) and the step (3) as it was, and subjected to the respective evaluation tests. Results are shown in Table 1.

[Table 1]

**Table 1**

| | Diluent *¹ | Length of diluted layer | Dilution rate (% by volume) | Content in phosgene *² | | Content in reused methylene chloride *³ | | Content in polycarbonate *³ | | Die Rust test | Heat resistance test (YI value) |
|---|---|---|---|---|---|---|---|---|---|---|---|
| | | (cm) | | CCl₄ | CHCl₃ | CCl₄ | CHCl₃ | CCl₄ | CHCl₃ | | |
| Example 1 | Zirconia (spherical, 2φ) | 30 | 50 | 35 | 110 | 5 | <5 | <1 | <5 | A | 1.1 |
| Example 2 | Zirconia (spherical, 2φ) | 30 | 30 | 40 | 90 | 5 | <5 | <1 | <5 | A | 0.9 |
| Example 3 | SUS (spherical, 1.5φ) | 30 | 30 | 60 | 130 | 5 | <5 | <1 | <5 | A | 1.5 |
| Example 4 | SUS (Raschig ring, 1.5φ) | 30 | 50 | 45 | 100 | 5 | <5 | <1 | <5 | A | 1.9 |
| Example 5 | Alumina (spherical, 2φ) | 20 | 50 | 50 | 100 | 5 | <5 | <1 | <5 | A | 2.2 |
| Example 6 | Alumina (spherical, 2φ) | 20 | 80 | 80 | 180 | 5 | <5 | <1 | <5 | A | 2.1 |
| Example 7 | SUS (Raschig ring, 1.5φ) | 30 | 50 | 45 | 100 | 5 | <5 | <1 | <5 | A | 1.8 |
| Example 8 | SUS (Raschig ring, 1.6φ) | 30 | 50 | 45 | 100 | 10 | 10 | 3 | <5 | A | 3.5 |
| Comparative Example 1 | - | - | - | 250 | 420 | 5 | <5 | 43 | 15 | B | 25 |
| Comparative Example 2 | SUS (Raschig ring, 1.6φ) | 30 | 50 | 45 | 100 | 100 | 100 | 30 | 10 | B | 20 |

| | | | | | | | | | | | |
|---|---|---|---|---|---|---|---|---|---|---|---|
| *1: Unit of diameter; mm *2: Unit; ppm by volume *3: Unit; ppm by mass | | | | | | | | | | | |

It may be said from Table 1 that in Examples 1 to 8 according to the production method of the present invention, high-quality polycarbonates could be produced with safety without substantially holding noxious phosgene.

Although Comparative Examples 1 and 2 are concerned with a measure for producing a polycarbonate without substantially holding noxious phosgene similar to the Examples, in Comparative Example 1 in which phosgene was produced by using a catalyst layer not diluted with a diluent, the contents of carbon tetrachloride and chloroform in phosgene exceeded 200 ppm by volume; in the polycarbonate, not only the content of carbon tetrachloride exceeded 40 ppm by mass, but the content of chloroform exceeded 10 ppm by mass; the die of the injection molding machine was easy to generate rust; and a low-quality polycarbonate with poor heat resistance was produced. In addition, in Comparative Example 2 in which methylene chloride recovered from the step (3) was reused without being distilled and purified, in the reused methylene chloride, the content of carbon tetrachloride and the content of chloroform were relatively high as 30 ppm by mass and 10 ppm by mass, respectively; the die of the injection molding machine was easy to generate rust; and a low-quality polycarbonate with poor heat resistance was produced.

### [Industrial Applicability]

According to the present invention, it is possible to continuously produce a polycarbonate with safety without substantially holding noxious phosgene, and the present invention is useful as an industrial method for production of a polycarbonate.

## Claims

1. A method for continuous production of a polycarbonate comprising (1) a step of allowing chlorine and carbon monoxide to react with each other to continuously produce a phosgene gas; (2) a step of continuously supplying the phosgene gas continuously produced in the step (1), an alkaline aqueous solution of a dihydric phenol-based compound, and an organic solvent into an oligomer reactor, to continuously produce a polycarbonate oligomer-containing reaction mixture; and (3) a step of continuously supplying the polycarbonate oligomer-containing reaction mixture produced in the step (2), an alkaline aqueous solution of a dihydric phenol-based compound, and an organic solvent into a polymer reactor, to continuously produce a polycarbonate, wherein the following requirements (i) to (iii) are satisfied:
(i) In the step (1), chlorine and carbon monoxide are allowed to react with each other by being passed through a catalyst layer diluted with a material which is substantially inactive against carbon monoxide and chlorine, thereby controlling all of the contents of carbon tetrachloride and chloroform in the obtained phosgene gas to not more than 200 ppm by volume.
(ii) The phosgene gas continuously produced in the step (1) is used for the step (2) as it is without being purified.
(iii) At least a part of the organic solvent used in at least one of the steps (2) and (3) is purified to obtain an organic solvent having the content of each of carbon tetrachloride and chloroform of not more than 50 ppm by mass, and the organic solvent is reused as the organic solvent of at least one of the steps (2) and (3).

2. The method for continuous production of a polycarbonate according to claim 1, wherein not only the supply of chlorine and carbon monoxide in the step (1) is stopped, but the supply of the phosgene gas into the oligomer reactor is stopped, and a device for transferring a noxious gas containing the phosgene gas into a detoxification device, thereby achieving harmlessness is provided.

3. The method for continuous production of a polycarbonate according to claim 2, wherein the detoxification device is a device for bringing the noxious gas containing the phosgene gas into contact with an alkaline aqueous solution, thereby achieving harmlessness.
